# EUROPEAN PATENT SPECIFICATION

(11) **EP 2 237 668 B1**
(45) Date of publication and mention of the grant of the patent: **25.04.2012**
(21) Application number: 09705405.0
(22) Date of filing: 27.01.2009
(51) Int. Cl.: A01N 43/40, A01P 9/00, A01N 43/54, A01N 43/88, A01N 47/24, A01N 37/50

(54) **MOLLUSCICIDE**
MOLLUSKIZID
MOLLUSCICIDE

(30) Priority: 29.01.2008 GB 0801589
(43) Date of publication of application: 13.10.2010
(73) Proprietor: Syngenta Participations AG, 4058 Basel (CH)
(72) Inventor: DEVAL, Renaud, 4058 Basel (CH); CASSIDY, Edward, Gerard, 4058 Basel (CH); FLUECKIGER, Claude, 4058 Basel (CH)
(74) Representative: Lee, Michael David
(86) International application number: PCT/GB2009/000229
(87) International publication number: WO 2009/095656

(56) References cited:
- EP-A1- 1 287 739
- WO-A1-2006/061164
- WO-A2-2006/128655
- "Strobilurins as antifouling compounds" RESEARCH DISCLOSURE, MASON PUBLICATIONS, HAMPSHIRE, GB, vol. 525, no. 7, 1 January 2008 (2008-01-01), page 4, XP007137861 ISSN: 0374-4353
- DATABASE BIOSIS [Online] BIOSCIENCES INFORMATION SERVICE, PHILADELPHIA, PA, US; October 2007 (2007-10), BRINGOLF ROBERT B ET AL: "Acute and chronic toxicity of technical-grade pesticides to glochidia and juveniles of freshwater mussels (Unionidae)" XP002581816 Database accession no. PREV200800201832 & ENVIRONMENTAL TOXICOLOGY AND CHEMISTRY, vol. 26, no. 10, October 2007 (2007-10), pages 2086-2093, ISSN: 0730-7268

## Description

The present invention relates to the use of compounds for the control of gastropods. In particular, it relates to a method of controlling gastropods using strobilurin compounds.

Gastropods, such as slugs and snails, are an increasing problem in horticulture and agriculture. They cause severe damage by feeding, and also generate unsightly mucus trails. Gastropods are serious pests, especially of cereals such as wheat, barley, oats and oil seed rape, and also of ornamental and vegetable plants. Gastropods feed both above and below the surface of the ground, on seeds, seedlings and plants, damaging shoots, roots, leaves and flowers, therefore reducing plant stand and crop yield.

Changes in the management of crops (such as minimum tillage, direct drilling, and high organic matter build up in the soil) have led to increased population densities of slugs and snails, further exacerbating this problem and resulting in more extensive and severe damage to crops.

Current chemical methods for controlling slugs and snails are mostly based on metaldehyde, ferric phosphate, methiocarb or thiodicarb. Methiocarb and thiodicarb are carbamate compounds, and are highly toxic to mammals. Since they are insecticides, their use in slug control can also harm beneficial insects present nearby. Metaldehyde and ferric phosphate are less toxic to beneficial organisms, but are also less efficacious for gastropod control. Non chemical methods of gastropod control include erecting physical barriers, application of predators such as beetles, or exposure to parasites such as nematodes. Whilst each of these methods has its merits, none of them provide levels of control that are as good as chemicals.

Therefore there exists a need for a chemical control method for slugs and snails, that is efficacious, but is not harmful to beneficial insects or animals. Surprisingly, it has now been found that strobilurin compounds provide excellent control of slugs and snails without harming beneficial organisms.

According to the present invention, there is provided a method for controlling gastropods, comprising exposing the gastropods to a molluscicidally effective amount of a strobilurin compound.

The present invention may be used to control any gastropods. For example, the present invention may be used to control gastropods such as *Arion* spp. (e.g. *A. ater, A. circumscriptus, A. distinctus, A. fasciatus, A. hortensis, A. intermedius, A. rufus, A. subfuscus, A. silvaticus, A: lusitanicus), Bradybaena spp. (e.g. B. fruticum), Cantareus* spp. (e.g. *C. asperses), Cepaea* spp. (e.g. *C. hortensis, C. nemoralis), Cochlodina* spp. (e.g. *C. laminata), Deroceras* spp. (e.g. *D. agrestis, D. empiricorum, D. laeve, D. panornimatum, D. reticulatum), Discus* spp. (e.g. *D. rotundatus), Euomphalia* spp., *Galba* spp. (e.g. *G. trunculata), Helicella* spp. (e.g. *H. itala, H. obvia), Helicigona* spp. (e.g. *H*. *arbustorum), Helicodiscus* spp., *Helix* spp. (e.g. *H. aperta, H. aspersa, H. pomatia), Limax* spp. (e.g. *L. cinereoniger, L. flavus, L. marginatus, L. maximus, L. tenellus), Lymnaea* spp. (e.g. *L. stagnalis), Milax* spp. (e.g. *M gagates, M marginatus, M. sowerbyi, M. budapestensis), Opeas* spp., *Oxyloma* spp. (e.g. *O. pfeifferi), Pomacea* spp. (e.g. *P. canaliculata), Tandonia* spp. (e.g. *T. budapestensis, T. sowerbyi), Vallonia* spp., *and Zonitoides* spp. (e.g. Z. *nitidus).*

Suitably the gastropods are classified within the subclass pulmonata. More suitably the present invention relates to the control of snails and slugs. In particular, the gastropods may be selected from the group consisting of *Helix* spp., *Agriolimax* spp., *Limax* spp., *Milax* spp., *Arion* spp., *Pomacea* spp. and *Deroceras* spp..

Strobilurin compounds are well known to those skilled in the art, due to their excellent fungicidal activities. They act as fungicides by inhibiting the cytochrome bc1 complex at the Q₀ site, therefore blocking electron transfer at the site of quinol oxidation, and preventing ATP formation. Any strobilurin compound may be used in the present invention. Details of all commercial strobilurin compounds can be found in 'The Pesticide Manual', 14th edition, published in 2006 by the British Crop Protection Council.

In one embodiment of the present invention, the strobilurin compound is selected from the group consisting of azoxystrobin, picoxystrobin, trifloxystrobin, kresoxim methyl, enestrobin, orysastrobin, dimoxystrobin, metominostrobin, pyraclostrobin, fluoxastrobin, famoxadone and fenamidone.

Preferably the strobilurin compound is selected from the group consisting of azoxystrobin, picoxystrobin, trifloxystrobin, fluoxastrobin, kresoxim methyl and pyraclostrobin. In one embodiment, the strobilurin compound is selected from the group consisting of azoxystrobin, picoxystrobin, trifloxystrobin and fluoxastrobin. Alternatively, the strobilurin compound is selected from the group consisting of azoxystrobin, picoxystrobin and trifloxystrobin. Alternatively, the strobilurin compound is selected from the group consisting of azoxystrobin, picoxystrobin and fluoxastrobin. Alternatively, the strobilurin compound is selected from the group consisting of picoxystrobin, trifloxystrobin and fluoxastrobin. Alternatively, the strobilurin compound is azoxystrobin or picoxystrobin. In a further embodiment, the strobilurin compound is azoxystrobin. Alternatively, the strobilurin compound is picoxystrobin. Alternatively, the strobilurin compound is trifloxystrobin. Alternatively, the strobilurin compound is fluoxastrobin.

The present invention also includes mixtures of strobilurin compounds, such as mixtures of azoxystrobin and picoxystrobin, or mixtures of azoxystrobin and trifloxystrobin. Such mixtures may be useful for example, to improve molluscicidal efficacy or as part of a resistance management strategy. The relative amounts of each compound in the mixture may be adjusted to take account of the properties of the selected compounds themselves, and to maximise the molluscicidal effect.

Further the strobilurin compounds of the present invention may be mixed, or co-applied with one or more other compounds that have molluscicidal activity, such as metaldehyde, methiocarb, thiodicarb, spinosad, spinetoram or metallic ions (such as iron or copper, for example in the form of iron phosphate or iron chelate). In one embodiment, the strobilurin compound is mixed with at least one compound selected from the group consisting of metaldehyde, spinosad, spinetoram and a metallic ion. In particular, the strobilurin compound is mixed with a metal ion. In one embodiment the strobilurin compound is mixed with a metallic ion. In a further embodiment, the metallic ion is in the form of iron chelate. Alternatively, the metallic ion is in the form of iron phosphate. Further the strobilurin compounds of the present invention may be mixed with one or more other pesticidal compounds so that the mixture simultaneously provides control against more than one pest. For example, the strobilurin compounds of the present invention may be mixed with one or more of the following fungicides to provide excellent slug and fungal control: chlorothalonil, cyproconazole, propiconazole, difenoconazole, penconazole, fenpropidin and fenpropimorph.

The term "controlling" or "control" as used herein includes paralysis, repellency, feeding inhibition and killing of gastropods. In the context of plants, it includes protecting plants from gastropod infestation.

The term "molluscicidally effective amount" refers to an amount of the compound that, when ingested or sensed, is sufficient to achieve a good level of control.

The present invention has the added advantage that, since strobilurin compounds have excellent fungicidal activity, good fungal control may also be achieved at the locus at which the compounds are applied, for example on and around the plants.

The strobilurin compound may be applied directly to the plants, or to the locus in which they are growing. Suitably, the compound is applied to the soil adjacent to the base of the plant stem, to ensure maximum exposure of slugs or snails close to the plant to the compound.

The strobilurin compound may also be used to protect the roots of plants, by application directly to the soil or growing media. Preferably this is a preventative measure that takes place before the plant is planted, so that the compound can be thoroughly mixed throughout the growing medium.

Suitably, the strobilurin compound is applied in the form of a composition or formulation. For example, the strobilurin may be applied in the form of, as a component of, incorporated into, coated onto or adsorbed into a bait. Suitably, the composition further comprises one or more adjuvants, surfactants and/or dispersants, to facilitate absorption of the compound by the slug gut. In one embodiment, the composition further comprises at least one adjuvant. In another embodiment, the composition further comprises at least one surfactant.

The strobilurin fungicide may be applied in any convenient physical form. For example the fungicide may be formulated as an emulsifiable concentrate, suspension concentrate, ready-to-use solution, emulsion, microemulsion, sprayable powder, soluble powder, dispersible powder, wettable powder, dust, granule, pellet, bait or capsule formulation.

For consumer application, the compositions of the present invention are suitably formulated in a ready-to-use format, such as a sprayable powder, granule, or pellet formulation. For professional application to agricultural crops, the compositions of the present invention are suitably formulated as dispersible granules, sprayable liquid concentrates, ready to use baits, or pellets.

In one embodiment, the strobilurin compound is in the form of a bait composition that comprises at least one further molluscicidal compound a mollusc attractant, and optionally a carrier.

Any suitable carriers that are conventionally used in crop protection products may be used in the composition of the present invention. These are well known to those skilled in the art of formulation technology.

A mollusc attractant is anything that attracts molluscs. The attractant may be a phagostimulant.

The attractants or carriers may be phagostimulants. Phagostimulants are conventionally used in slug and snail bait formulations to attract gastropods to ingest the molluscicide, and are typically attractants and/or food. Mixtures of phagostimulants with other suitable organic and/or inorganic carriers may also be used.

Suitable phagostimulants for molluscicides include ground cereals (such as wheat flour, barley flour, rye flour and rice starch), crushed soya beans, fish meal, molasses, crushed rapeseed and the like. Mixtures of phagostimulants may also be used in the present invention.

A phagostimulant may act as a carrier and an attractant. Any suitable mollusc attractant may be used in the bait composition. Other known attractants include beer, yeast, and extract of dead slugs.

To make the bait more palatable for gastropods, one or more of the following substances may also be used as additive:
a) vitamin B, in particular B1, B2, nicotinic acid or nicotinamide;
b) vitamin E;
c) animal or vegetable proteinaceous material, for example albumins and their hydrolytic degradation products, in particular those obtained by enzymatic hydrolysis by, for example, pepsin (such as metaproteins, proteoses, peptones, polypeptides, peptides, diketopiperazines and amino acids);
d) one or more amino acids or salts or amides thereof, which may also be synthetic products;
e) a nucleic acid or a hydrolytic degradation product thereof, such as a nucleotide, a nucleoside, adenine, guanine, cytosine, uracil or thymine;
f) urea or carbamic acid;
g) an ammonium salt, for example ammonium acetate;
h) an amino sugar, for example glucosamine or galactosamine;
i) compounds of sodium, potassium, calcium or magnesium, or traces of compounds of manganese, copper, iron, cobalt, zinc, aluminium, boron or molybdenum;
j) phosphoric acid or sugar phosphates;
k) water.

The bait composition may also comprise one or more bird repellents, such as anthraquinone.

The bait composition may optionally comprise stabilizers that have a fungistatic, fungicidal, bacteriostatic and/or bactericidal action, such as sodium benzoate, methyl p-hydroxy-benzoate, cetyltrimethylammonium bromide, citric acid, tartaric acid, sorbic acid, phenols, alkylphenols or chlorinated phenols.

The present invention has the added advantage that, being a large spectrum fungicide, the strobilurin will provide a fungal protection by reducing the growth of moulds on the bait itself. This ensures longer lasting activity of the bait and therefore a longer and better molluscicidal activity, without the need to add specific preservatives with fungicidal activity.

The composition may be formulated to provide a slow or delayed release of the strobilurin compounds over time, so as to provide long-term protection against gastropods. Suitable slow-release auxiliaries which may be employed in the formulation include, for example, resins (such as urea/formaldehyde resins), soybean meal, waxes, stearates and oils (such as castor oil).

Other auxiliaries that may be used in the composition of the present invention include, for example, binders (such as methylcellosolve, polyvinylpyrrolidone, polyvinyl alcohol, polyacrylates, polymethacrylates, natural waxes, chemically modified waxes and synthetic waxes, sugars, starch, alginates, agar, lignosulphonates and gum arabic), humectants (such as polyalcohols, for example sugars or glycerol), preservatives, colorants and repellents for warm-blooded species.

The bait composition may also be coated to protect it from moisture degradation, and subsequent leaching of the strobilurin compound into the soil. Such a coating may extend the life of the bait composition, and reduce the re-application frequency needed. Suitably the bait composition does not prematurely degrade when it is applied to damp soil.

The bait composition is typically provided in the form of granules or pellets. The size of the pellets is such that they can be readily consumed by the target gastropods to ensure ingestion. Typically, the pellets are from about 1 to about 5 mm in length.

Some strobilurins, such as azoxystrobin, are systemic in plants, so that they are taken up by plant roots and transported around the plant. For such strobilurins, uptake of the compound by the plant from the soil has the added benefit that gastropods feeding on the plant material would be exposed to the molluscicide. Therefore, this may be an additional or alternative way of delivering the molluscicidal compound.

According to the present invention, there is provided a method for reducing mollusc damage to plants, comprising treating the plants or the locus surrounding the plants with a molluscicidally effective amount of a strobilurin compound. The present invention also extends to a method for improving crop yield, comprising treating the crop or the locus surrounding the crop with a molluscicidally effective amount of a strobilurin compound .

The term "locus" as used above refers to the physical location where the crop or plant is growing. For example, for agricultural crops, the locus may be a field; for vegetable crops, the locus may be a flowerbed or vegetable patch; and for ornamental plants, the locus may be a flower pot or container.

"Improving crop yield" means increasing the yield of a plant (for example as measured by plant biomass, grain or fruit yield, protein content, carbohydrate or oil content, or leaf area) by a measurable amount over the yield of the same plant produced under the same conditions, but without the application of the subject method.

According to the present invention, there is provided a composition for controlling gastropods, comprising a molluscicidally effective amount of a strobilurin compound, at least one further molluscicidal compound a mollusc attractant, and optionally a carrier. Optionally, the composition also comprises an adjuvant such as a surfactant. Suitably, the composition is a bait composition. Suitably, the strobilurin compound is incorporated into, adsorbed into, or coated onto the bait.

Formulations that are particularly suitable for controlling gastropods according to the present invention are granules or pellets which comprise from 0 to 90% by weight of carrier material, from 0.01 to 20 wt% by weight of active ingredient, from 10 to 95% by weight of phagostimulant, from 0.5 to 25% by weight of binder, and optionally from 0 to 15% by weight of other auxiliaries. Suitably, the granules or pellets comprise from 0 to 70 wt% by weight of carrier material, from 1 to 10% by weight of active ingredient, from 25 to 90% by weight of phagostimulant, from 5 to 20% by weight of binder, and optionally from 0 to 15% by weight of other auxiliaries.

The application rate of the composition of the invention depends on the concentration of the strobilurin compound in the formulation. Typically, the concentration of the strobilurin compound will be adjusted so that the composition may be applied at a dose in the range from about 1 to 15kg bait /ha. When the composition comprises from 0.01 to 20 wt % of active ingredient, this is equivalent to applying between about 0.1g ai /ha and 3000g ai/ha. To achieve optimal control it is preferable that the molluscicidal composition is distributed as uniformly as possible between the plants.

According to the present invention, there is provided use of a composition comprising a strobilurin compound in a molluscicidally effective amount to control gastropods. The present invention may be used to protect any crop, ornamental or vegetable plants from damage by gastropods, in either open (such as plant pots, gardens, fields and the like) or closed (such as glasshouses, polytunnels and the like) environments.

Suitable target crops for control of gastropods include, for example cereals (such as wheat, barley, rye, oats, rice, maize or sorghum); beet (such as sugar or fodder beet); fruit (such as pome fruit, stone fruit, apples, pears, plums, peaches, almonds, cherries, strawberries, raspberries or blackberries); legumes (such as beans, lentils, peas or soya beans); oil crops (such as oil seed rape, mustard, poppies, olives, sunflowers, coconuts, castor, cacao or peanuts); marrows (such as pumpkins, cucumbers or melons); fibre plants (such as cotton, flax, hemp or jute); citrus fruits (such as oranges, lemons, grapefruits or tangerines); vegetables (such as spinach, lettuce, asparagus, cabbage species, carrots, onions, tomatoes, potatoes, or capsicums); laurels (such as avocado, Cinnamonium or camphor); and tobacco, nuts, coffee, egg plants, sugar cane, tea, pepper, grapevines, hops, the banana family, latex plants and ornamentals.

For example the invention may be used on any of the following ornamental species: *Ageratum, Alonsoa, Anemone* spp., *Anisodontea capsenisis, Anthemis, Antirrhinum, Rhododendron* spp., *Begonia* spp. *(eg. B. elatior, B. semperflorens, B. tubéreux), Bougainvillea* spp., *Brachycome* spp., *Calceolaria, Capsicum annuum, Catharanthus roseus,* Ornamental *Brassica, Canna* spp., *Chrysanthemum, Cineraria* spp. (*C. maritime), Crassula coccinea, Cuphea ignea, Dicentra spectabilis, Dorotheantus, Eustoma grandiflorum, Forsythia, Fuchsia* spp., *Germanium Gnaphalium, Gomphrena globosa, Heliotropium, Helianthus, Hibiscus, Hortensia, Hosta, Hypoestes phyllostachya, Impatiens* spp. *(I. Walleriana), Iresines, Kalanchoe* spp., *Lantana camara, Lavatera trimestris, Leonotis leonurus, Lilium, Mesembryanthemum, Mimulus, Nemesia, Tagetes, Dianthus* spp. (carnation), *Canna, Oxalis, Bellis, Pelargonium* spp. *(P. peltatum, P. Zonale), Viola* spp. (pansy), *Petunia, Plecthranthus, Poinsettia, Parthenocissus* spp. *(P. Quinquefolia, P. Tricuspidata), Primula, Ranunculus, Rosa* spp. (rose), *Salvia, Scaevola aemola, Schizanthus wisetonensis, Solanum, Surfinia, Tagetes* spp., *Nicotinia, Verbena* spp., *Zinnia* spp. and other bedding plants. Preferred within this class of ornamental crops are *Viola, Petunia, Begonia, Impatiens, Geranium* (including from seeds and cuttings), *Chrysanthemum* (including from cuttings), *Rosa* (including pot plants and from cuttings), *Poinsettia, Ranunculus, Fuchsia, Salvia* and *Hortensia.*

The compositions of the present invention are also suitable for the protection of plant propagation material, for example seed, such as fruits, tubers or kernels, from gastropods. The propagation material can be treated with the composition prior to planting, for example by soaking, spraying or coating seed prior to sowing. Alternatively, the composition can be applied directly to the locus at which the propagation material is to be planted (for example onto the ground, into a seed furrow, or into pot plant growing media). The present invention may also be used to protect stored products from gastropods.

### EXAMPLES

### Example 1- Forced ingestion study on D. reticulatum

Forced ingestion studies were setup using the Field Slug, *Deroceras reticulatum.* A formulation containing the strobilurin azoxystrobin was injected directly into the gut of the slugs. Details of the formulation (Dynasty® 100FS) are:

| | |
|---|---|
| Azoxystrobin 100FS millbase | 10% w/v |
| 2% xantham gum | 17.5% w/v |
| Deionised water | 76.5% w/v |

Slugs were field-collected, and starved for 48 hours prior to forced ingestion studies. Individual slugs were weighed and anaesthetized using carbon dioxide for 10 to 20 minutes. Test solutions were incorporated into an agar jelly (1.0% w/v) to reduce the risk of regurgitation. For each slug, ten ul aliquots of warm agar mix were injected into the buccal cavity using a fine glass micro-syringe and gently eased into the slug crop. Individual slugs were then placed into labelled Petri dishes lined with moist, unbleached, absorbent paper. For each treatment, 20 slugs were injected. An untreated control of warm agar gel was injected for comparison purposes.

Treated slugs were maintained under controlled environmental conditions (12 hour photoperiod, 15°C, 90% relative humidity), and slug health assessments recorded over the three subsequent days. Slug health was classified into one of the following categories:
- Healthy: showing no symptoms
- Affected: showing some symptoms of poisoning, excessive mucus production / deformity
- Dead

The results are shown in Table 1.

**TABLE 1: Slug health 24, 28 and 72 hours after treatment**

| **Rate (mgazoxystrobin/slug)** | **Time (hours)** | **Number of slugs** | | |
|---|---|---|---|---|
| | | **Healthy** | **Affected** | **Dead** |
| 0 (control) | 24 | 20 | 0 | 0 |
| | 48 | 20 | 0 | 0 |
| | 72 | 20 | 0 | 0 |
| 0.0001 | 24 | 20 | 0 | 0 |
| | 48 | 20 | 0 | 0 |
| | 72 | 20 | 0 | 0 |
| 0.001 | 24 | 16 | 4 | 0 |
| | 48 | 14 | 2 | 4 |
| | 72 | 14 | 2 | 4 |
| 0.01 | 24 | 12 | 6 | 2 |
| | 48 | 8 | 6 | 6 |
| | 72 | 8 | 6 | 6 |
| 0.1 | 24 | 2 | 2 | 16 |
| | 48 | 2 | 0 | 18 |
| | 72 | 2 | 0 | 18 |
| 1 | 24 | 0 | 0 | 20 |
| | 48 | 0 | 0 | 20 |
| | 72 | 0 | 0 | 20 |

The results show that azoxystrobin is active against *D. reticulatum* slugs, and that efficacy increases with increased concentration of azoxystrobin, and with time.

### Example 2: Forced ingestion trial of Deroceras reticulatum using various strobilurin compounds

Adult *D. reticulatum* were field-collected from an irrigated plot of mixed herbage and maintained in plastic boxes lined with moist, unbleached, absorbent paper and under controlled environmental conditions (12 hour photoperiod, 10°C, 90%RH). Slugs were fed *ad. lib.* on wheat grain and a mixture of fresh foliage for a period of up to, but not exceeding, one week prior to testing. Slugs were then starved for a period of 48 h before treatment.

Individual slugs were weighed and anaesthetized using CO₂ for a period of 10-20 minutes. Test solutions were incorporated into a warm agar jelly (1.0 % w/v) to reduce the risk of regurgitation. Twenty µl aliquots of warm agar mix was then injected into the buccal cavity of a single slug using a fine glass micro-syringe and gently eased into the slug crop. Individual slugs were then placed into labelled Petri dishes lined with moist, unbleached, absorbent paper. Following application of treatments, slugs were maintained under controlled environmental conditions (12 hr photoperiod, 10°C, 90% RH), and slug health recorded over the subsequent three days. Slug health was classified into one of four categories:
- Healthy (showing no symptoms)
- Affected (showing some symptoms of poisoning, excessive mucus production/deformity)
- Moribund (severely affected/paralysed, unable to move in response to gentle prodding)
- Dead

For each treatment, 20 slugs were injected. Table 2 below shows the treatments made. The results are shown in Table 3, presented as a percentage of the total number of slugs tested for each treatment.

**TABLE 2: Treatment list for example 2**

| **Treatment** | **Product** | **Active ingredient** | **Concentration (mg a.i./slug)** | **Slug Species** |
|---|---|---|---|---|
| 1 | Amistar® 250SC | Azoxystrobin | 0.01 | *Deroceras reticulatum* |
| 2 | Amistar® 250SC | Azoxystrobin | 0.025 | *Deroceras reticulatum* |
| 3 | Amistar® 250SC | Azoxystrobin | 0.05 | *Deroceras reticulatum* |
| 4 | Amistar® 250SC | Azoxystrobin | 0.1 | *Deroceras reticulatum* |
| 5 | 250SC blank formulation | None | Equiv to 0.01 | *Derocerasreticulatum* |
| 6 | 250SC blank formulation | None | Equiv to 0.1 | *Deroceras reticulatum* |
| 7 | Flint® WG | Trifloxystrobin | 0.05 | *Deroceras reliculatum* |
| 8 | Flint® WG | Trifloxystrobin | 0.5 | *Deroceras reticulatum* |
| 9 | Disarm® 480SC | Fluoxastrobin | 0.05 | *Deroceras reticulatum* |
| 10 | Disarm® 480SC | Fluoxastrobin | 0.5 | *Deroceras reticulatum* |

**TABLE 3: Slug health 72 hours after forced ingestion**

| **Treatment** | **Healthy %** | **Affected %** | **Dead %** |
|---|---|---|---|
| 1 | 90 | 0 | 10 |
| 2 | 70 | 10 | 20 |
| 3 | 10 | 0 | 90 |
| 4 | 0 | 0 | 100 |
| 5 | 100 | 0 | 0 |
| 6 | 70 | 10 | 20 |
| 7 | 100 | 0 | 0 |
| 8 | 0 | 0 | 100 |
| 9 | 90 | 10 | 0 |
| 10 | 10 | 0 | 90 |

An untreated control in the form of warm agar gel was injected for each batch of testing for comparison purposes. No mortality was observed to any slug when forced to ingest the untreated agar gel.

Axozystrobin (treatments 1 to 4) was shown to be highly effective at killing slugs. A probit analysis indicated that a mean concentration of 0.068 mg a.i./slug kills 99% of the population, thus suggesting that azoxystrobin is extremely toxic to *Deroceras reticulatum.* Treatments 5 and 6 were 'blank formulation' controls, i.e. the same as the Amistar formulation (250SC), but with no azoxystrobin present. The results show little activity for these controls, indicating that the presence of a strobilurin compound such as azoxystrobin is key to molluscicidal efficacy.

Treatments 8 (trifloxystrobin) and 10 (fluoxastrobin) also provided significant levels of slug mortality at 0.5 mg a.i./slug.

### Example 3: Forced ingestion trial of azoxystrobin (FS formulation) and picoxystrobin against various slug species

The methods used in this trial were the same as those described in Example 2, except that the following slug species were collected and tested: *Deroceras reticulatum, Arion distinctus, Arion fasciatus* and *Tandonia budapestensis*

For each treatment, 20 slugs were injected. Table 4 shows the treatments made. The results are shown in Table 5, presented as a percentage of the total number of slugs tested for each treatment.

**TABLE 4. Treatment regimes for example 3**

| **Treatment** | **Product** | **Active ingredient** | **Concentration (mg a.i./slug)** | **Slug Species** |
|---|---|---|---|---|
| 1 | Acanto® 250SC | Picoxystrobin | 0.75 | *Deroceras reticulatum* |
| 2 | Acanto® 250SC | Picoxystrobin | 0.5 | *Deroceras reticulatum* |
| 3 | Acanto® 250SC | Picoxystrobin | 0.05 | *Deroceras reticulatum* |
| 4 | Acanto® 250SC | Picoxystrobin | 0.025 | *Deroceras reticulatum* |
| 5 | Dynasty® 100FS | Axozystrobin | 1 | *Arion distinctus* |
| 6 | Dynasty® 100FS | Axozystrobin | 0.1 | *Arion distinctus* |
| 7 | Dynasty® 100FS | Axozystrobin | 0.01 | *Arion distinctus* |
| 8 | Dynasty® 100FS | Axozystrobin | 0.001 | *Arion distinctus* |
| 9 | Dynasty® 100FS | Axozystrobin | 10 | *Arion fasciatus* |
| 10 | Dynasty® 100FS | Axozystrobin | 1 | *Arion fasciatus* |
| 11 | Dynasty® 100FS | Axozystrobin | 0.1 | *Arion fasciatus* |
| 12 | Dynasty® 100FS | Axozystrobin | 0.01 | *Arion fasciatus* |
| 13 | Dynasty® 100FS | Axozystrobin | 0.001 | *Arion fasciatus* |
| 14 | Dynasty® 100FS | Axozystrobin | 10 | *Tandonia budapestensis* |
| 15 | Dynasty® 100FS | Axozystrobin | 1 | *Tandonia budapestensis* |
| 16 | Dynasty® 100FS | Axozystrobin | 0.1 | *Tandonia budapestensis* |
| 17 | Dynasty® 100FS | Axozystrobin | 0.01 | *Tandonia budapestensis* |
| 18 | Dynasty® 100FS | Axozystrobin | 0.001 | *Tandonia budapestensis* |
| 19 | Dynasty® 100FS | Axozystrobin | 0.1 | *Deroceras reticulatum* |
| 20 | 100FS blank formulation | None | Equiv to 0.1 | *Deroceras reticulatum* |

**TABLE 5: Slug health 72 hours after forced ingestion**

| **Treatment** | **Healthy %** | **Affected %** | **Moribund %** | **Dead %** |
|---|---|---|---|---|
| 1 | 0 | 0 | 0 | 100 |
| 2 | 20 | 0 | 0 | 80 |
| 3 | 20 | 10 | 10 | 60 |
| 4 | 60 | 0 | 0 | 40 |
| 5 | 0 | 0 | 0 | 100 |
| 6 | 10 | 0 | 0 | 90 |
| 7 | 40 | 0 | 0 | 60 |
| 8 | 50 | 0 | 0 | 50 |
| 9 | 0 | 0 | 0 | 100 |
| 10 | 0 | 0 | 0 | 100 |
| 11 | 60 | 0 | 0 | 40 |
| 12 | 0 | 0 | 0 | 100 |
| 13 | 100 | 0 | 0 | 0 |
| 14 | 0 | 0 | 0 | 100 |
| 15 | 0 | 0 | 0 | 100 |
| 16 | 10 | 0 | 0 | 90 |
| 17 | 0 | 0 | 0 | 90 |
| 18 | 80 | 0 | 0 | 20 |
| 19 | 30 | 0 | 0 | 70 |
| 20 | 50 | 20 | 0 | 30 |

An untreated control in the form of warm agar gel was injected for each batch of testing for comparison purposes. No mortality was observed to any slug when forced to ingest the untreated agar gel.

Picoxystrobin (treatments 1 to 4) was shown to be highly effective at killing slugs when applied at doses equivalent to 0.05 mg a.i./slug or more. A probit analysis indicated that a mean concentration of 0.198 mg a.i./slug kills 99% of the population, thus suggesting that picoxystrobin is extremely toxic to *Deroceras reticulatum.*

Azoxystrobin was previously shown to be highly molluscicidal to *D. reticulatum* at a concentration equivalent to 0.1 mg a.i./slug. As a result of these findings azoxystrobin was screened against 3 other slug species to assess the species-specificity of the treatment. Results showed azoxystrobin (applied in the form of a 100FS formulation) to be effective against all three species. A probit analysis showed that in order to kill approximately 99% of the population, azoxystrobin would need to be delivered at a concentration equivalent to 0.183 mg a.i./slug against *A. distinctus;* 0.904 mg a.i./slug against *A. fasciatus* and 0.163 mg a.i./slug against *T. budapestensis.* Such findings possibly suggest that a concentration of approximately 0.1 mg a.i./slug is effective against all recognised pest species of slug, regardless of size.

A comparison of the results for treatments 19 (Dynasty 100FS formulation) and 20 ('blank' 100FS formulation, with no azoxystrobin present) shows that while the blank formulation has slight molluscicidal activity, azoxystrobin must be present to provide good levels of slug mortality. It is believe that surfactants present in the formulation may improve uptake of the strobilurin compound into the slug gut.

### Example 4: Forced ingestion trial of azoxystrobin (SC formulation) against various slug species

The methods used in this trial were the same as those described in Example 2, except that the following slug species were collected and tested: *Deroceras reticulatum, Arion distinctus, Arion fasciatus* and *Tandonia budapestensis*

For each treatment, at least 20 slugs were injected. Table 6 shows the treatments made. The results are shown in Table 7, presented as a percentage of the total number of slugs tested for each treatment.

**TABLE 6: Treatment list for example 4**

| **Treat ment** | **Product** | **Active ingredient** | **Concentration (mg a.i./slug)** | **Slug Species** |
|---|---|---|---|---|
| 1 | Amistar® 250SC | Azoxystrobin | 0.1 | *Deroceras reticulatum* |
| 2 | Amistar® 250SC | Azoxystrobin | 0.1 | *Arion fasciatus* |
| 3 | Amistar® 250SC | Azoxystrobin | 0.1 | *Arion distinctus* |
| 4 | Amistar® 250SC | Azoxystrobin | 0.1 | *Tandonia budapestensis* * |
| 5 | 250SC blank formulation | None | Equiv to 0.1 | *Deroceras reticulatum* |

| | | | | |
|---|---|---|---|---|
| ** T. budapestensis* slugs were very large due to the time of year that the slugs were collected and trial conducted. | | | | |

**TABLE 7: Slug health 72 hours after forced ingestion**

| **Treatment** | **Healthy %** | **Affected %** | **Dead %** |
|---|---|---|---|
| 1 | 0 | 0 | 100 |
| 2 | 22.5 | 15 | 62.5 |
| 3 | 25 | 5 | 70 |
| 4 | 25 | 35 | 40 |
| 5 | 33 | 7 | 60 |

The results show that azoxystrobin (applied in the form of a 250SC formulation) is effective against all four slug species tested.

As with example 3, the blank formulation (treatment 5) has some activity, but this is not as good as the activity observed when azoxystrobin is present (compare to treatment 1, same slug species).

### Example 5: Forced ingestion trial of azoxystrobin and iron chelate

The methods used in this trial were the same as those described in Example 2. The treatments tested are listed in Table 8, and results are in Table 9, presented as a percentage of the total number of slugs tested for each treatment. For each treatment, between 10 and 20 slugs were tested.

**TABLE 8: Treatments for example 5**

| **Treatment** | **Product** | **Active ingredient** | **Concentration (mg a.i./slug)** | **Slug species** |
|---|---|---|---|---|
| 1 | Amistar® 250SC | Azoxystrobin | 0.03 | *Deroceras reticulatum* |
| 2 | Amistar® 250SC | Azoxystrobin | 0.05 | *Deroceras reticulatum* |
| 3 | Sequestrene® | Iron chelate | 0.694 | *Deroceras reticulatum* |
| 4 | Sequestrene® | Iron chelate | 1.388 | *Deroceras reticulatum* |
| 5 | Amistar® 250SC + Sequestrene® | Azoxystrobin + iron chelate | 0.03 + 0.694 | *Deroceras reticulatum* |
| 6 | Amistar® 250SC + Sequestrene® | Azoxystrobin + iron chelate | 0.03 + 1.388 | *Deroceras reticulatum* |
| 7 | None | Untreated control | n/a | *Deroceras reticulatum* |

**TABLE 9: Slug health 72 hours after forced ingestion**

| **Treatment** | **Healthy %** | **Affected %** | **Moribund %** | **Dead %** |
|---|---|---|---|---|
| 1 | 50 | 20 | 0 | 30 |
| 2 | 20 | 10 | 0 | 70 |
| 3 | 80 | 0 | 0 | 20 |
| 4 | 35 | 30 | 0 | 35 |
| 5 | 47 | 0 | 20 | 33 |
| 6 | 10 | 20 | 10 | 60 |
| 7 | 100 | 0 | 0 | 0 |

The results show that the use of mixtures of iron chelate and azoxystrobin gives even better slug control than the use of either compound alone when applied at equivalent rates.

### Example 6: Tests to establish potential effect of surfactants on molluscicidal activity

The methods used in this trial were the same as those described in Example 2. The treatments tested are listed in Table 10, and results are in Table 11, presented as a percentage of the total number of slugs tested for each treatment. For each treatment 20 slugs were tested. For ease of comparison, the concentrations of each treatment applied were equivalent to the amount of each component that would be applied in a treatment of Amistar® at a rate of 0.1 mg a.i./slug.

**TABLE 10: Treatment list for example 6**

| **Treatment** | **Product** | **Concentration mg a.i./slug** | **Slug species** |
|---|---|---|---|
| 1 | Azoxystrobin technical | 0.1 | *D. reticulatum* |
| 2 | Surfactant blend* (as used in Amistar® 250SC formulation) | 0.092 | *D. reticulatum* |
| 3 | 250SC blank formulation (i.e. without azoxystrobin) | Equiv to 0.1 | *D. reticulatum* |
| 4 | Amistar® 250SC | 0.1 | *D. reticulatum* |

| | | | |
|---|---|---|---|
| * Attplus® 242 | | | |

**TABLE 11: Slug health 72 hours after forced ingestion**

| **Treatment** | **Healthy %** | **Affected %** | **Dead or Moribund %** |
|---|---|---|---|
| 1 | 45 | 12.5 | 42.5 |
| 2 | 5 | 10 | 85 |
| 3 | 33 | 7 | 60 |
| 4 | 0 | 0 | 100 |

Due to difficulties in incorporating technical grade azoxystrobin into the agar (and therefore controlling the concentration of azoxystrobin force ingested to the slugs), the results for treatment 1 are unreliable and may not properly reflect the intrinsic molluscicidal activity of azoxystrobin.

The results show that although both the surfactant only (treatment 2), and blank formulation (treatment 3) treatments resulted in some slug mortality, the additional presence of azoxystrobin gave superior results, with 100% slug mortality.

## Claims

1. A method for controlling gastropods, comprising exposing the gastropods to a composition comprising a molluscicidally effective amount of a strobilurin compound.

2. A method according to claim 1, wherein the composition further comprises at least one surfactant.

3. A method according to any one of claims 1 to 2, wherein the composition further comprises at least one further molluscicidal compound.

4. A method according to claim 3, wherein the further molluscicidal compound is iron chelate.

5. A method according to claim 1, wherein the gastropods are from the subclass pulmonata.

6. A method according to claim 5, wherein the gastropods are selected from the group consisting of *Helix* spp., *Agriolimax* spp., *Limax* spp., *Milax* spp., *Arion* spp., *Pomacea* spp. and *Deroceras* spp..

7. A method according to claim 1, wherein the strobilurin compound is selected from the group consisting of azoxystrobin, picoxystrobin, trifloxystrobin, fluoxastrobin, kresoxim methyl and pyraclostrobin.

8. A method according to claim 7, wherein the strobilurin compound is azoxystrobin.

9. A method according to claim 1, wherein the strobilurin compound is in the form of a bait composition that comprises a carrier, and optionally an attractant.

10. A method for reducing mollusc damage to plants, comprising treating the plants or the locus surrounding the plants with a molluscicidally effective amount of a strobilurin compound.

11. A composition for controlling gastropods, comprising
a) a molluscicidally effective amount of a strobilurin compound,
b) at least one further molluscicidal compound,
c) a mollusc attractant, and optionally
d) a carrier.

12. A composition according to claim 11, wherein the mollusc attractant or carrier, is a phagostimulant.

13. A composition according to claim 11, further comprising at least one surfactant.

14. A composition according to claim 11, wherein the further molluscidal compound is iron chelate.

## Patentansprüche

1. Verfahren zur Kontrolle von Gastropoden umfassend die Aussetzung der Gastropoden gegenüber einer als Molluskizid effektiven Menge einer Strobilurinverbindung.

2. Verfahren gemäß Anspruch 1, wobei die Zusammensetzung weiter mindestens einen oberflächenaktiven Stoff umfasst.

3. Verfahren gemäß einem der Ansprüche 1 oder 2, wobei die Zusammensetzung ferner mindestens eine als Molluskizid wirksame Verbindung umfasst.

4. Verfahren gemäß Anspruch 3, wobei die weitere als Molluskizid wirksame Verbindung ein Eisenchelat ist.

5. Verfahren gemäß Anspruch 1, wobei die Gastropoden der Unterklasse *pulmonata* angehören.

6. Verfahren gemäß Anspruch 5, wobei die Gastropoden aus der Gruppe bestehend aus *Helix* spp., *Agriolimax* spp., *Limax* spp., *Milax* spp., *Arion* spp., *Pomacea* spp. und *Deroceras* spp ausgewählt sind.

7. Verfahren gemäß Anspruch 1, wobei die Strobilurinverbindung aus der Gruppe bestehend aus Azoxystrobin, Picoxystrobin, Trifloxystrobin, Fluoxastrobin, Kresoxim-methyl und Pyraclostrobin aus gewählt ist.

8. Verfahren gemäß Anspruch 7, wobei die Strobilurinverbindung Azoxystrobin ist.

9. Verfahren gemäß Anspruch 1, wobei die Strobilurinverbindung in der Form einer Köderzusammensetzung vorliegt, die einen Träger und wahlweise ein Lockmittel umfasst.

10. Verfahren zur Reduzierung von durch Molluske hervorgerufene Pflanzenschäden umfassend die Behandlung der Pflanzen oder des die Pflanzen umgebenden Ortes mit einer als Molluskizid effektiven Menge einer Strobilurinverbindung.

11. Zusammensetzung zur Kontrolle von Gastropoden umfassend:
a) eine als Molluskizid effektive Menge einer Strobilurinverbindung;
b) mindestens eine weitere als Molluskizid wirkende Verbindung;
c) ein Molluske anlockendes Mittel und wahlweise
d) einen Träger.

12. Zusammensetzung gemäß Anspruch 11, wobei das Molluske anlockende Mittel oder der Träger ein Phagostimulans ist.

13. Zusammensetzung gemäß Anspruch 11 ferner umfassend mindestens ein oberflächenaktives Mittel.

14. Zusammensetzung gemäß Anspruch 11, wobei die weitere als Molluskizid wirkende Verbindung ein Eisenchelat ist.

## Revendications

1. Procédé de contrôle de gastéropodes, comprenant l'exposition des gastéropodes à une composition comprenant une quantité à efficacité molluscicide d'un composé de type strobilurine.

2. Procédé selon la revendication 1, dans lequel la composition comprend en outre au moins un tensioactif.

3. Procédé selon l'une quelconque des revendications 1 à 2, dans lequel la composition comprend en outre au moins un autre composé molluscicide.

4. Procédé selon la revendication 3, dans lequel l'autre composé molluscicide est un chélate de fer.

5. Procédé selon la revendication 1, dans lequel les gastéropodes appartiennent à la sous-classe pulmonata.

6. Procédé selon la revendication 5, dans lequel les gastéropodes sont sélectionnés parmi le groupe constitué par *Helix* spp., *Agriolimax* spp., *Limax* spp., *Milax* spp., *Arion* spp., *Pomacea* spp. et *Deroceras* spp.

7. Procédé selon la revendication 1, dans lequel le composé de type strobilurine est sélectionné parmi le groupe constitué par l'azoxystrobine, la picoxystrobine, la trifloxystrobine, la fluoxastrobine, le krésoxim-méthyl et la pyraclostrobine.

8. Procédé selon la revendication 7, dans lequel le composé de type strobilurine est l'azoxystrobine.

9. Procédé selon la revendication 1, dans lequel le composé de type strobilurine se présente sous la forme d'une composition d'appât qui comprend un porteur, et éventuellement un agent d'attraction.

10. Procédé pour réduire les dommages provoqués aux plantes par des mollusques, comprenant le traitement des plantes ou du site entourant les plantes avec une quantité à efficacité molluscicide d'un composé de type strobilurine.

11. Composition pour contrôler des gastéropodes, comprenant :
a) une quantité à efficacité molluscicide d'un composé de type strobilurine,
b) au moins un autre composé molluscicide,
c) un agent d'attraction des mollusques, et éventuellement
d) un porteur.

12. Composition selon la revendication 11, dans laquelle l'agent d'attraction des mollusques ou le porteur est un phagostimulant.

13. Composition selon la revendication 11, comprenant en outre au moins un tensioactif.

14. Composition selon la revendication 11, dans laquelle l'autre composé molluscicide est un chélate de fer.
